# EUROPÄISCHE PATENTANMELDUNG

(11) **EP 1 702 819 A1**
(43) Veröffentlichungstag der Anmeldung: **20.09.2006**
(21) Anmeldenummer: 06005063.0
(22) Anmeldetag: 13.03.2006
(51) Int. Cl.: B60R 25/10, G08B 13/14

(54) **Diebstahlüberwachung für Fahrzeuge und/oder andere bewegliche Gegenstände mit einem Bewegungsmelder**

(30) Priorität: 18.03.2005 DE 202005004422 U
(71) Anmelder: Huis, Wolfgang, 49811 Lingen / Ems (DE)
(72) Erfinder: Huis, Wolfgang, 49811 Lingen / Ems (DE)
(74) Vertreter: Manitz, Finsterwald & Partner GbR

(57) **Zusammenfassung**

Eine Diebstahlüberwachung für Fahrzeuge und/oder bewegliche Gegenstände mit einem Bewegungsmelder, welche sich dadurch auszeichnet, dass dem als Funkbewegungsmelder (1) ausgebildeten Bewegungsmelder mindestens ein Neigungsschalter (2) zugeordnet ist. Der Funkbewegungsmelder ist vorzugsweise am Innenspiegel anbringbar.

## Beschreibung

Die vorliegende Erfindung betrifft eine Diebstahlüberwachung für Fahrzeuge und/oder andere bewegliche Gegenstände mit einem Bewegungsmelder. Solche Diebstahlüberwachungen sind bekannt, beispielsweise in Form von PKWs mit Diebstahlsicherungen, die auf Erschütterungen reagieren. Solche Diebstahlsicherungen haben aber den Nachteil, dass sie relativ empfindlich sind und häufig, gerade bei starken Windböen, zu Fehlwarnungen führen. Ferner führen sie bei modernen Autos, die über längere Zeiträume stehen, häufig zu einer Tiefentladung der Batterie. Im Übrigen werden bei solchen Alarmanlagen die akustischen Warnsignale häufig als Fehlsignal missachtet bzw. ignoriert. Wird die Diebstahlüberwachung so eingestellt, dass sie nicht überempfindlich reagiert, so kann ein gewiefter Dieb beispielsweise Teile und Gegenstände unbemerkt entwenden.

Es ist nämlich bekannt, dass durch Einzeltäter oder durch professionelle Banden Autos entwendet bzw. Fahrzeuge aufgebrochen werden, um Teile wie Reifen, Felgen, Radios, Navigationssysteme, Airbags, Brennstoff und andere Teile zu entwenden.

Die professionelle Entwendung von Treibstoffen, z.B. Diesel, bei Baustelleneinrichtungen, LKWs und Baustellenfahrzeugen ist ebenfalls in großen Mengen üblich und führt jedes mal zu erheblichen Schadensauswirkungen. Um auch hierbei eine frühe Alarmierung auszulösen, ist eine Überwachung am wirkungsvollsten. Die Installation einer Überwachungseinrichtung ist jedoch schon die wirkungsvollste Abschreckung für Diebe aller Art und Gruppen.

Der Erfindung liegt die Aufgabe zugrunde, eine wirksame Diebstahlüberwachung vorzusehen, die sich für die Einzelüberwachung von mobilen Gegenständen, insbesondere für die Einzelüberwachung von Fahrzeugen jeglicher Art im ruhenden Verkehr, bei Fahrzeughändlern, Jachthäfen, Baustelleneinrichtungen, Autohöfen und Sicherungsbetrieben eignet und die oben angegebenen Probleme überwindet.

Zur Lösung dieser Aufgabe wird erfindungsgemäß eine Diebstahlüberwachung der eingangs genannten Art vorgesehen, die sich dadurch auszeichnet, dass dem als Funkbewegungsmelder ausgebildeten Bewegungsmelder mindestens ein Neigungsschalter zugeordnet ist.

Besonders günstig ist es, wenn der als Funkbewegungsmelder ausgebildete Bewegungsmelder zum Betrieb mit diesem zugeordneten Batterien bzw. Akkus und/oder mit einer Solarzelleneinheit oder mit einer anderen Energieversorgungsquelle ausgestattet ist.

Über eine Kontaktschleife ist beispielsweise auch die Überwachung von Tankdeckeln möglich.

Besonders bevorzugte Ausführungsformen der Erfindung sind den Unteransprüchen zu entnehmen und werden in Bezug auf die beigefügten Zeichnungen näher erläutert, die zeigen:

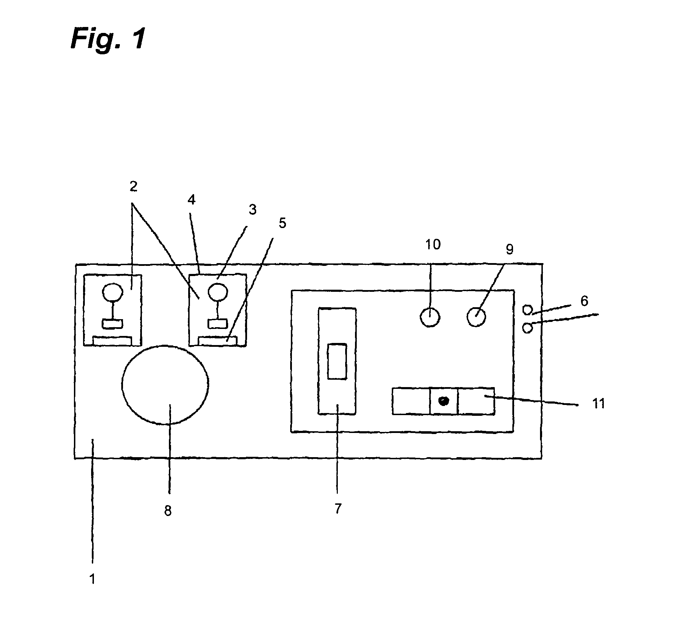

- Fig. 1: einen Funkbewegungsmelder mit Neigungsschalter, Kontaktschleife, Testsignal und Wasserwaagenlibelle in schematischer Darstellung und

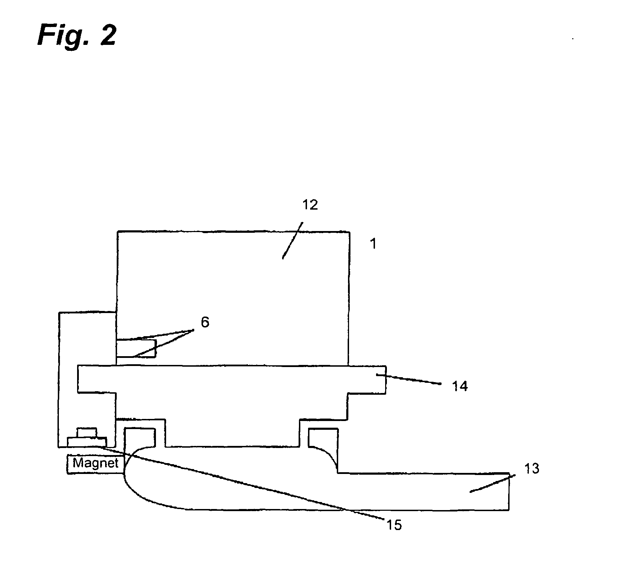

- Fig. 2: eine schematische Darstellung einer Tankdeckelüberwachung mit eigenem Funkmelder, beispielsweise in einem auf dem Tankdeckel angeordneten Gehäuse.

Die Zeichnung zeigt somit eine Fahrzeugüberwachung durch einen Funkbewegungsmelder (1) mit integriertem Neigungsschalter (2) und mit einem Anschluss für eine zusätzliche Kontaktschleife (6) für Überwachung von Fahrzeugen aller Art im ruhenden Verkehr und zur Überwachung von Baustelleneinrichtungen.

Die Besonderheit der Erfindung ist, dass ein Funkbewegungsmelder (1) mit einem oder mehreren Lage-, Neigungs-, bzw. Positionsschaltern (2) (Pendel -, Kugel-, Klöppel-, Bewegungsschaltern) ausgestattet wird, der insbesondere zur Überwachung und Sicherung von Fahrzeugen, Fahrzeugteilen aller Art im ruhenden Verkehr und für Baustelleneinrichtungen dient. Die Bewegung des Pendels (3) bringt einen Reedkontakt (5) zum Schalten.

Die Funk-Schalteinrichtung (1) mit Funkübertragung dient der Überwachung von Einzelfahrzeugen aller Art wie PKW, LKW, landwirtschaftlichen Fahrzeugen, Wasserfahrzeugen, Baustellenfahrzeugen, Baustelleneinrichtungen und anderer mobiler Güter, die beim Ändern ihrer bestimmungsmäßigen Positionen bzw. bei Einbruch eine Alarmmeldung absetzen soll.

Eine Besonderheit des verwendeten Neigungsschalters (2) ist, dass der Pendel-, Neigungs-, Klöppel- und Bewegungsschalter (2), in dem das bewegte Element ein Pendel (3), eine Kugel oder ein Klöppel (3) ist, in einer Flüssigkeit (4) unterschiedlicher Viskosität zur Dämpfung des bewegten Elementes geführt wird, um ruckartige oder zu schnelle Pendelbewegungen zu vermeiden.

Die Dämpfung des Pendels (3) ist notwendig, damit nicht bei Rüttelbewegungen durch Personen und durch Windeinfluss bei Fahrzeugen eine vorschnelle Auslösung des Neigungsschalters (2) erfolgt. Erst wenn ein Fahrzeug eindeutig um ca. 3 Grad angehoben wird, was z.B. bei Demontage von Reifen, Felgen und einseitigem Anheben des Fahrzeuges durch Abschleppvorgänge passiert, wird eine Alarmmeldung durchgeführt. Durch die Dämpfung des Neigungsschalters (2) (Pendelsensors) wird somit ein ungewollter Alarm weitestgehend vermieden, indem Schaltvorgänge erst ausgeführt werden, wenn eine eindeutige Lageveränderung stattfindet.

Eine zusätzliche Besonderheit der Schalteinrichtung (1) ist die Anschlussmöglichkeit einer Kontaktschleife (6) zur Absicherung von weiteren Türen und Fenstern durch Reedkontakte (5) oder durch eine Widerstandsschleife für Fahrzeugteile, wie Felgen, Scheibenwischer, Tankdeckel und andere schützenswerte Fahrzeugteile und Baustelleneinrichtungen.

Durch die Kontaktschleife (6), die auch widerstandsüberwacht gegen Manipulation ausgeführt werden kann, können weitere Einrichtungs- und Fahrzeugteile durch Plombierungsschleifen, Reedkontakte oder Schaltelemente für eine Alarmmeldung genutzt werden.

Die Funk-Schalteinrichtung (1) wird mit einem Wahlschalter (7) ausgestattet, der die Möglichkeit für den Betrieb der Fahrzeugüberwachung, Raumüberwachung und der Lagerung bei nicht benutzten Funkschalteinrichtungen bietet.

Bei der **Fahrzeugüberwachung** sind die Schaltungen des Bewegungsmelders (8), Neigungsschalters (2) und die Kontaktschleife (6) aktiv.

Bei der **Raumüberwachung** sind Bewegungsmelder (8) und Kontaktschleife (6) aktiv.

Bei **Lagerung** ist der Melder von der Hauptzentrale noch erkennbar, jedoch sind die Schalteinrichtungen alle deaktiviert.

Um die Funk-Schalteinrichtung (1) bei Fahrzeugen in eine Position zu bringen, in der die Neigungsschalter (2) aktiv sind, wurde der Melder mit einer Testfunktionstaste (9) zur Positionskontrolle und einer Kontroll-LED (10) sowie mit einer Wasserwaagenlibelle (11) ausgestattet, so dass es möglich ist, den Melder so zu positionieren, dass die Neigungsschalter (2) eine optimale Auslöseposition bekommen. Die Testfunktionstaste (9) ermöglicht es, eine schnelle Funktionsposition beim Ausrichten des Melders (1) zu finden.

Durch die Verwendung des Funkmelders (1) und der Kontaktschleife (6) in einem wetterfesten ex-geschützten und für Tankanlagen zugelassenen Gehäuse (12) ist dieser auch für die Überwachung von Tankeinfüllstutzen (13) geeignet. In diesem Fall ist der Funkmelder (1) fest mit dem Tankdeckel (14) verbunden. Ein Auslösekontakt (15) (Reedkontakt) bzw. eine abgesetzte gesonderte Schalteinrichtung würde dann beim Öffnen des Tankdeckels (14) zur Alarmauslösung führen.

Um in einem Fahrzeug die Funkschalteinrichtung (1) bestehend aus dem Bewegungsmelder (8), Neigungsschalter (2), und der Kontaktschleife (6) optimal nutzen zu können, ist die Positionierung am Rückspiegel optimal.

Es können jedoch auch andere Positionen, Ablagen, Klemmvorrichtungen an Scheiben oder Ähnliches verwendet werden.

Für die Montage am Rückfahrinnenspiegel wurde die Schalteinrichtung (1) mit einem Gummizug zur einfachen und schnellen Montage ausgestattet. Eine einfache und problemlose Montage am Rückspiegel ist somit gegeben.

Eine Befestigung durch andere Hilfsmittel ist jedoch möglich z.B. Klettverschluss, Kabelbinder etc.

Die Position am Rückfahrinnenspiegel ist vorteilhaft wegen der optimalen Ausrichtung des Positions- und Neigungsschalters (2), da mit dem Kugelgelenk der Spiegelaufnahme auch Schräglagen des Fahrzeuges ausgeglichen werden können.

Da der Melder insbesondere in wechselnden, mobilen Einrichtungen zum Einsatz kommt, wie bei Fahrzeugen aller Art und Baustelleneinrichtung, ist der Betrieb der Funkmelder durch Batterien oder Akkus der allgemein Gebräuchlichste, jedoch sind andere Versorgungsarten mit Energie möglich.

Gerade bei der Verwendung in Fahrzeugen lassen sich die Geräte auch mit einer Solarzelleneinheit in Kombination mit wieder aufladbaren Akkus betreiben.

Hierbei ist jedoch eine größere Gehäuseform von Nachteil.

In Containern und anderen Baustelleneinrichtungen sowie Werkzeugkisten, wo eine Spannungsversorgung zur Verfügung steht, wird der Melder durch Batterien bzw. Akkus oder an einem Festanschluss betrieben. Bei ausreichender Energie kann die Auswertung zur Positionsveränderung der Neigungsschalter (2) durch eine elektronische Auswertung erfolgen. Wegen der geringen Energiekapazität wurde jedoch ein Neigungsschalter (2) mit Reedkontakt (5) verwendet.

Die Funkschalteinrichtung (1) mit Neigungsschalter (2) und Kontaktschleife (6) gilt für die Einzelüberwachung von mobilen Gegenständen, insbesondere für die Einzelüberwachung von Fahrzeugen jeglicher Art im ruhenden Verkehr, bei Fahrzeughändlern, Jachthäfen, Baustelleneinrichtungen, Autohöfen und Sicherungsbetrieben.

Die Funkschalteinrichtung (1) soll einen möglichst großen Schutz vor Entwenden von mobilen Teilen durch Einzeltäter oder durch professionelle bandenmäßige Diebstähle bieten. Eine frühzeitige Alarmierung ist der beste Schutz vor größeren Beschädigungen.

Die Kombination der Funkschalteinrichtung (1) mit Neigungsschalter (2) und Kontaktschleife (6) an einer Funkalarmzentrale und der Signalisierung über ein Telefonwählgerät (Festanschluss oder GSM) oder an einen akustischen, optischen Alarm, ist eine möglichst gute Absicherung, um einen möglichen Diebstahl frühzeitig entgegen zu wirken.

### Bezugszeichenliste

- 1: Funkbewegungsmelder/Funk-Schalteinrichtung im ex-geschützten Gehäuse bzw. mit Zulassungsklassifizierung
- 2: Positionsschalter/Neigungsschalter
- 3: Pendel, Klöppel
- 4: Gehäuse ölgefüllt
- 5: Reedkontakt
- 6: Kontaktschleife
- 7: Umschalter für Funktion
- Fahrzeugüberwachung
- Raumüberwachung
- Lagerung
- 8: Bewegungsmelder/PIR-Melder
- 9: Testschalter
- 10: Testsignal
- 11: Wasserwaagenlibelle
- 12: Gehäuse ex-geschützt
- 13: Tankeinfüllstutzen
- 14: Tankdeckel
- 15: Auslöseschalter/Reedkontakt (bei Entfernung des Tankdeckels)

## Patentansprüche

1. Diebstahlüberwachung für Fahrzeuge und/oder bewegliche Gegenstände mit einem Bewegungsmelder,
**dadurch gekennzeichnet,**
**dass** dem als Funkbewegungsmelder (1) ausgebildeten Bewegungsmelder mindestens ein Neigungsschalter (2) zugeordnet ist.

2. Diebstahlüberwachung für Fahrzeuge und/oder bewegliche Gegenstände mit einem Bewegungsmelder, insbesondere nach Anspruch 1,
**dadurch gekennzeichnet,**
**dass** der als Funkbewegungsmelder ausgebildete Bewegungsmelder zum Betrieb mit diesem zugeordneten Batterien bzw. Akkus und/oder mit einer Solarzelleneinheit oder mit einer anderen Energieversorgungsquelle ausgestattet ist.

3. Diebstahlüberwachung nach Anspruch 1 oder 2 mit mindestens einem Neigungsschalter,
**dadurch gekennzeichnet,**
**dass** der Neigungsschalter (2) einen Reedkontakt (5) umfasst, und/oder
**dass** das bewegte Element (3) des Neigungsschalters (2) zu seiner Dämpfung in einer Flüssigkeit angeordnet ist, und/oder
**dass** der Funkbewegungsmelder (1) und der Neigungsschalter (2) in einem Gehäuse (4) untergebracht sind, und/oder dass der bzw. jeder Neigungsschalter ein Pendel, einen Klöppel (3) oder eine Kugel und einen Reedkontakt umfasst, und/oder
**dass** eine Wasserwaagenlibelle (11) dem Neigungsschalter (2) zugeordnet und vorzugsweise am Gehäuse vorgesehen ist.

4. Diebstahlüberwachung nach einem der Ansprüche 2 oder 3,
**dadurch gekennzeichnet,**
**dass** der Funkbewegungsmelder (1) einen Anschluss für eine Kontaktschleife (6) aufweist, der gegebenenfalls am Gehäuse (4) vorgesehen ist, und/oder
**dass** der Funkbewegungsmelder einen Anschluss für Widerstandsschleifen aufweist, und/oder
**dass** eine Kontaktschleife (6) vorgesehen ist, die einen Auslösekontakt (15) bzw. Reedkontakt aufweist, der dem Tankdeckel zugeordnet und in einem explosionsgeschützten Gehäuse (12) untergebracht ist, und/oder
**dass** der Funkbewegungsmelder (1) in einem explosionsgeschützten Gehäuse (4) untergebracht und zur Anbringung am Tankdeckel (14) ausgelegt ist.

5. Diebstahlüberwachung nach einem der Ansprüche 2 bis 4,
**dadurch gekennzeichnet,**
**dass** das Gehäuse (4) zur Anbringung am Fahrzeug über ein Kugelgelenk ausgelegt ist, und/oder
**dass** das Gehäuse (4) zur Anbringung an einem Innenrückspiegel eines Fahrzeugs ausgelegt ist.

6. Diebstahlüberwachung nach einem der vorhergehenden Ansprüche,
**dadurch gekennzeichnet,**
**dass** Kontaktschleifen für Fenster und Türen an den Funkbewegungsmelder anschließbar sind, und/oder
**dass** dem Funkbewegungsmelder (1) eine Funkalarmzentrale zugeordnet ist, und vorzugsweise
**dass** der Funkalarmzentrale eine Vielzahl von insbesondere gleich ausgebildeten Diebstahlüberwachungen zuordenbar ist, und besonders bevorzugt,
**dass** die Funkalarmzentrale über ein Telefonwählgerät (Festanschluss oder GSM) verfügt, und/oder
**dass** der Diebstahlüberwachung ein akustischer und/oder optischer Alarm zugeordnet ist.

7. Diebstahlüberwachung nach einem der vorhergehenden Ansprüche,
**dadurch gekennzeichnet,**
**dass** eine Testfunktionseinrichtung (9, 10) vorgesehen ist, beispielsweise in Form einer Testfunktionstaste (9) und einer Kontroll-LED (10), und/oder
**dass** sie einen Umschalter (7) aufweist, der zwischen einer Diebstahlüberwachungsposition, einer Lagerungsposition und ggf. einer Raumüberwachungsposition umschaltbar ist.

8. Diebstahlüberwachung nach einem der vorhergehenden Ansprüche,
**dadurch gekennzeichnet,**
**dass** der Funkbewegungsmelder als Funk-Schalteinrichtung (1) ausgelegt ist.

9. Diebstahlüberwachung nach Anspruch 3 und einem der vorhergehenden Ansprüche,
**dadurch gekennzeichnet,**
**dass** das Gehäuse (4) wettergeschützt ist.
